# EUROPEAN PATENT APPLICATION

(11) **EP 2 461 273 A2**
(43) Date of publication of application: **06.06.2012**
(21) Application number: 11190076.7
(22) Date of filing: 22.11.2011
(51) Int. Cl.: G06K 9/20, G06K 9/62

(54) **Method and system for machine-learning based optimization and customization of document similarities calculation**

(30) Priority: 29.11.2010 US 955799
(71) Applicant: Palo Alto Research Center Incorporated, Palo Alto, California 94304 (US)
(72) Inventor: Brdiczka, Oliver, Mountain View, CA California 94304 (US)
(74) Representative: Skone James, Robert Edmund

(57) **Abstract**

One embodiment of the present invention provides a system for optimizing and customizing document-similarity calculation. During operation, the system presents (202) a collection of similar documents to a user, collects (204) feedback on the similarity of the documents from the user, generates (206) generic rules for calculating document similarity, and filters (208) documents with customized similarity calculation based on the feedback provided by the user.

## Description

This disclosure is generally related to analysis of document similarities. More specifically, this disclosure is related to optimizing and customizing document-similarity calculation based on machine-learning.

Modem workers often deal with large numbers of documents; some are self-authored, some are received from colleagues via email, and some are downloaded from websites. Many documents are often related to one another as a user may modify an existing document to generate a new document. For example, a worker may generate an annual report by combining a number of previously generated monthly reports. In a further example, a presenter at a meeting may use slides modified from an earlier presentation at a different meeting.

Existing methods for identifying similarities among documents assume a global relationship between semantic entity occurrences in documents and their similarity. The definition of a global formula of relationship leads to correct identification of similar documents. However, such approaches do not consider varying user preferences and user configurations. A customized similarity calculation is necessary to cope with differences across multiple users.

One embodiment of the present invention provides a system for optimizing and customizing document-similarity calculation. During operation, the system presents a collection of similar documents to a user, collects feedback on the similarity of the documents from the user, generates generic rules for calculating document similarity, and filters documents with customized similarity calculation based on the feedback provided by the user.

In a variation on this embodiment, the user feedback comprises one or more of: an indication of documents in the collection that are falsely included; and an indication of additional similar documents not included the collection.

In a variation on this embodiment, the system calculates the document similarity by: extracting a number of semantic entities from the documents; and calculating a similarity measure between the documents based on inverse document frequency (IDF) values of the extracted semantic entities.

In a variation on this embodiment, generating the generic rules for calculating document similarity comprises: extracting features from a respective document and its related documents based on the collected user feedback; and applying machine-learning techniques to generate rules based on the extracted features.

In a further variation, the extracted features of the respective document and its related documents comprise one or more of: a similarity rank ofthe related documents; a document weight of respective and related documents; an entity occurrence magnitude of respective and related documents; an entity occurrence average of respective and related documents; a number of shared entities among respective and related documents; an average entity weight of the shared entities among respective and related documents; a maximum entity weight of the shared entities among respective and related documents; a minimum entity weight of the shared entities among respective and related documents; a typed number, average entity weight, minimum entity weight, and maximum entity weight of the shared entities among respective and related documents; a number of complementary (none-shared) entities in respective and related documents; an average entity weight of the complementary entities in respective and related documents; a maximum entity weight of the complementary entities in respective and related documents; a minimum entity weight of the complementary entities in respective and related documents; and a typed number, average entity weight, minimum entity weight, and maximum entity weight of the complementary entities in respective and related documents.

In a variation on this embodiment, the system generates a decision tree for calculating document similarity using supervised machine learning.

In a variation on this embodiment, filtering documents with customized similarity calculation for a user comprises: extracting features from a respective document and its related documents based on the feedback provided by the user; and applying machine-learning techniques to generate filtering rules based on the extracted features.

FIG. 1 presents a diagram illustrating an entity-extraction system in accordance with an embodiment of the present invention.

FIG. 2 presents a flowchart illustrating the process ofoptimization and customization of document-similarity calculation in accordance with an embodiment of the present invention.

FIG. 3 presents a flowchart illustrating the process of calculating document similarities based on machine-learning in accordance with an embodiment of the present invention.

FIG. 4 presents a diagram illustrating exemplary feature sets extracted from similar documents in accordance with an embodiment ofthe present invention.

FIG. 5 illustrates an exemplary computer system for optimizing and customizing document-similarity calculation in accordance with one embodiment of the present invention.

In the figures, like reference numerals refer to the same figure elements.

Embodiments of the present invention provide a solution for optimizing and customizing document-similarity calculation. In one embodiment of the present invention, the document-similarity calculation system presents a collection of similar documents to a user to collect feedback on the similarity of the documents. Based on the feedback provided by the user, the system generates generic rules for identifying future similar documents. The system can also filter documents with customized similarity calculation based on the feedback from the user.

Conventional similarity calculations among documents typically rely on matching the text of the concerned documents by counting and comparing occurrences of words. For example, email messages discussing local weather may all include words like rain, snow, or wind. Hence, by comparing the text, one can estimate the similarity between two messages. However, such an approach can be inefficient and may generate many false results. For example, for documents containing boilerplate text, the co-occurrence of the boilerplate may be high between two documents, whereas the similarity between the two documents may actually be low. To overcome this issue, an entity-extraction method is proposed that relies on comparing the occurrences of meaningful words defined as "entities" in order to derive similarities between documents, instead of counting the occurrences of each word.

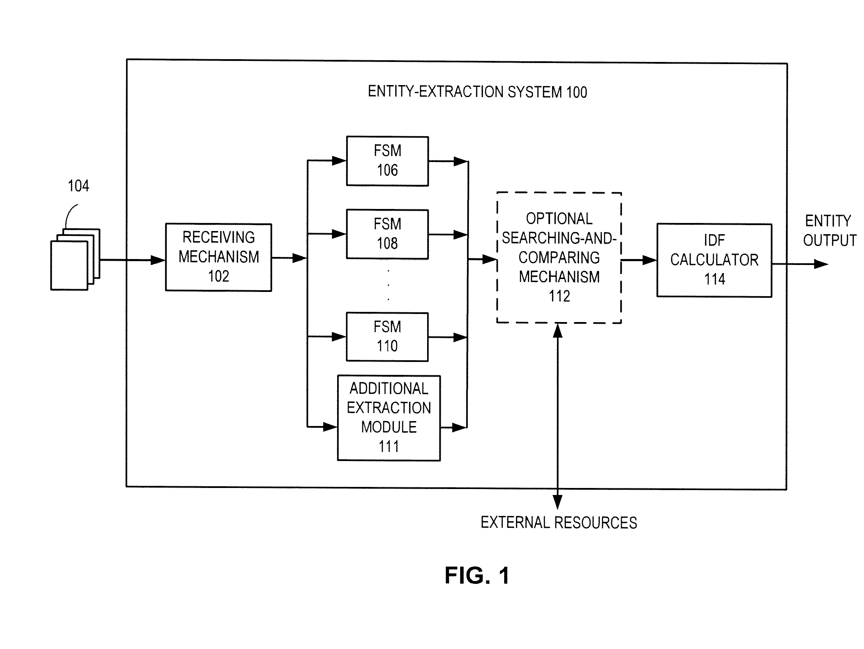

Such an entity-extraction process is illustrated in FIG. 1. Entity-extraction system 100 includes a receiving mechanism 102, a number of finite state machines (FSMs) 106-110, an optional searching-and-comparing mechanism 112, and an inverse document frequency (IDF) calculator 114. During operation, receiving mechanism 102 receives input documents 104 for entity extraction. The text of the received documents is then sent to a number of FSMs, including FSMs 106-110. These FSMs have been designed differently to recognize semantic entities belonging to different predefined groups. Semantic entities can be words, word combinations, or sequences having specific meanings, such as people's names, companies' names, dates and times, street addresses, industry-specific terms, email addresses, uniform resource locators (URLs), and phone numbers. Additional semantic entities not belonging to the predefined groups can be extracted by an additional extraction module 111.

To avoid meaningless words being incorrectly recognized by FSMs 106-110 as semantic entities, certain types of the identified entities from the text of the received documents are sent to optional searching-and-comparing mechanism 112 to be searched and compared with external resources. Subsequently, the entity candidates are sent to IDF calculator 114, which calculates their IDF values. The IDF value can be used to measure the significance of an entity candidate. A low IDF value often indicates that the entity candidate is broadly used across the corpus, thus being likely to be a boilerplate, a statistic outlier, or a wrong detection. In contrast, a high IDF value indicates that such an entity candidate is truly a meaningful or significant semantic entity and deserves to be extracted from the document. Finally, entity candidates with IDF values within a predetermined range of values are extracted, whereas entity candidates with IDF values outside this range are ignored.

The extracted semantic entities, which are considered significant entities, can then be used for similarity calculations between documents. If two documents have a large number of overlapping significant entities, the system can determine that these two documents have a high likelihood of being similar, thus having a high similarity value. In addition to counting the occurrence of the significant entities within documents, genetic entity weight is also taken into account when calculating document similarities. Entities belonging to different groups are assigned different weights. For example, entities belonging to the group of people's names are assigned a different weight than entities belonging to the group of street addresses. Depending on the importance of the different entity groups and the context of the corpus, the weights can be adjusted accordingly. For example, for a human-resources worker, people's names carry more weight than technical terms, whereas the opposite can be true for an engineer.

A number of different measures can be calculated for determining similarity between documents. For example, a first measure calculates the ratio of the weighted sum of the IDF values of the overlapping entities between two documents to the weighted summation of IDF values of entities in each document. Another measure similar to the first measure uses the weighted IDF values of entities in the union of the two documents, instead of summing weighted IDF values in each document separately. Subsequently, documents are placed in an order based on their entity-occurrence based similarity toward the given document. Two documents have similar levels of similarity if the difference between their entity-occurrence based similarity levels is less than a predetermined threshold.

Embodiments of the present invention provide a system for machine-learning based optimization and customization of document similarities calculation. This system takes into consideration varying user preferences and user configurations when extracting semantic entities in documents and calculating their similarity to cope with differences across multiple users.

In embodiments of the present invention, the system calculates similarity between a source document and a corpus of candidate documents based on semantic entities extracted from these documents. The resulting collection of similar documents found may contain false positives, i.e., documents in the collection that are falsely included, and false negatives, i.e., additional similar documents not included in the collection. To improve the future decision on document similarity and customize similarity calculation across users, the proposed method consists of two phases: optimization and customization.

The objective of phase one optimization is to enhance the global similarity calculation by incorporating user feedback. In phase one, the system presents the collection of similar documents related to the source document to the system users, and collects feedback on the similarity of the documents from them. The users may indicate documents in the collection that are falsely included, as well as additional similar documents from the original candidates that are not included in the collection. The users' feedback is provided to a machine-learning subsystem as the training data for supervised learning. The machine-learning subsystem generates a set of generic rules for calculating document similarity based on the collected feedback from the users. The generic rules generated by the machine-learning subsystem can be reviewed by the system designer before integrated into the existing similarity calculation framework. The generated rules can be evaluated by their false positive rate and true positive rate when applied to document-similarity calculation.

The second customization phase aims at providing individual tuning for finding similar documents for a respective user. This phase is an iterative process in which the user may give feedback constantly to improve the similarity calculation. This phase involves harvesting an individual user's feedback and applying a supervised machine-learning algorithm to the user feedback. Classification rules generated by the machine-learning algorithm can be used to filter similar documents for the respective user. User may choose rules based on the false positive rate, true positive rate, or the false positive to true positive ratio.

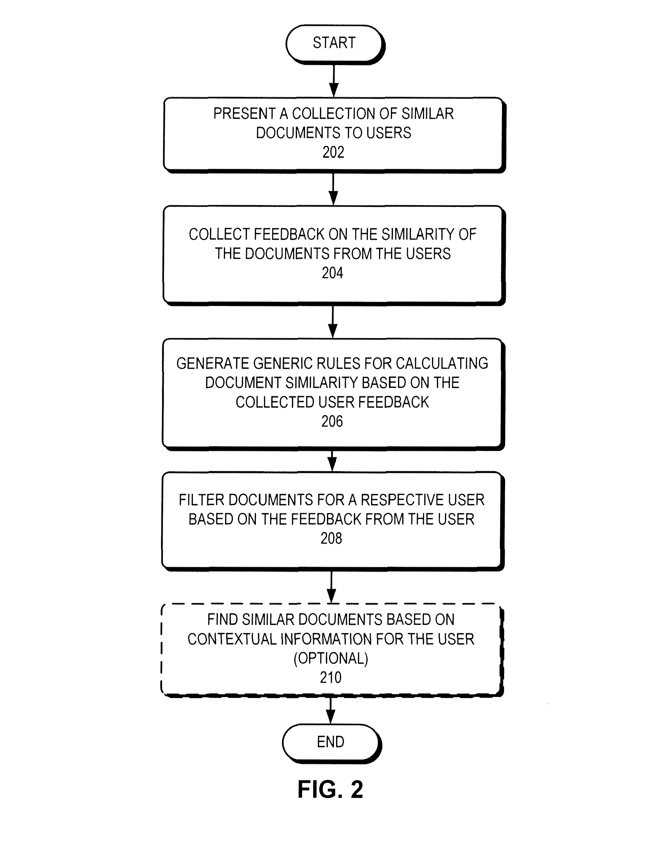

FIG. 2 presents a flowchart illustrating the process of optimization and customization of document-similarity calculation in accordance with an embodiment of the present invention. During operation, the system presents a collection of similar documents to users (operation 202). Subsequently, the system collects feedback on the similarity of the documents from the users (operation 204). In one embodiment, the user feedback comprises an indication of documents in the collection that are falsely included, and/or an indication of additional similar documents not included in the collection. The system then generates generic rules to optimize the calculation of similar documents based on the collected user feedback (operation 206). The feedback from a respective user may be used to customize the filtering of similar documents for the respective user (operation 208). The system can also optionally find similar documents based on contextual information for the user (operation 210).

Supervised machine learning is the task of inferring classification rules from supervised training data. A supervised learning algorithm analyzes the training data to extract features or properties of the data, and produce the classifier. The classifier can be a set of classification rules or a decision tree, which maps the features of the input data to the target classes. In the decision tree, leaves represent classifications and branches represent conjunctions of data features that lead to those classifications. More details on supervised machine learning and decision tree model are available in the documentation available from publicly available literature, such as "Introduction to Machine Learning," by Ethem Alpaydin, 2nd Ed., The MIT Press, 2010, the disclosure of which is incorporated by reference in its entirety herein.

In one embodiment, the system optimizes the calculation of document similarity based on collected user feedback. The user feedback includes additional similar documents and documents falsely marked as similar documents. The supervised learning algorithm analyzes these documents and extracts a list of **document** attributes or features that most likely separate similar from non-similar documents. The outcome of the supervised learning is a set of classification rules or a decision tree, which can be integrated into the entity-based document-similarity calculation algorithm. The generic classification rules based on the users' feedback can be deployed to optimize system performance, whereas the classification rules inferred from feedback of a respective user facilitate customized similarity calculation for the user. In another embodiment, a user interface is provided for user input of document features for the machine-learning algorithm.

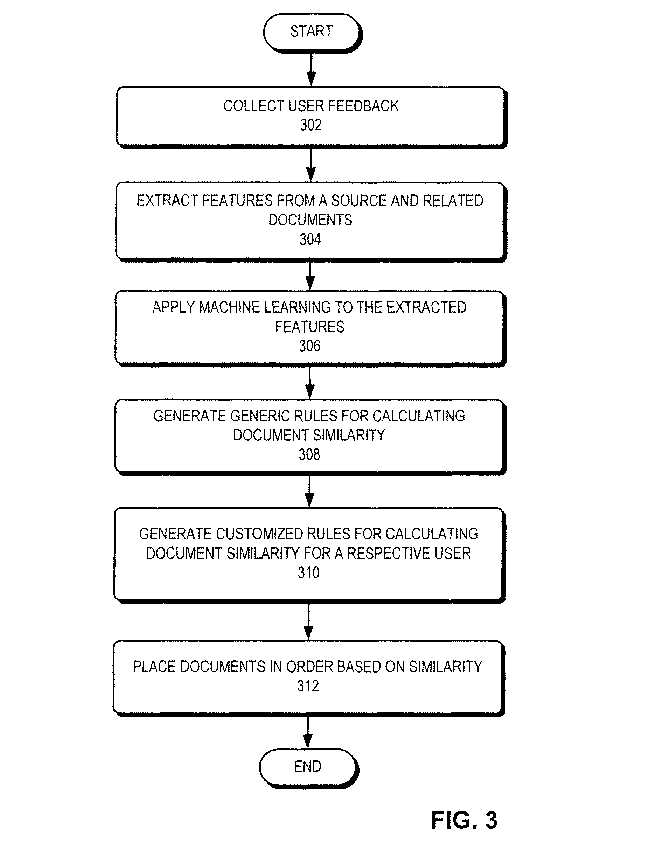

**FIG.** 3 presents a flowchart illustrating the process of calculating document similarities based on machine-learning in accordance with an embodiment of the present invention. During operation, the system collects user feedback comprising indications of documents in the collection of similar documents that are falsely included, and/or an indication of additional similar documents not included in the collection (operation 302), and extracts features from a source and related documents (operation 304). In one embodiment, the system applies machine learning to the extracted features (operation 306) to generate generic rules for calculating document similarity (operation 308). Feedback from a respective user can also be used for generating customized rules for calculating document similarity for the respective user (operation 310). The system then places the documents in order based on similarity (operation 312).

In one embodiment, the system applies supervised machine learning to generate generic rules for optimizing the calculation of document similarity. Supervised learning is the task of inferring classification rules from supervised training data consisting of a set of training examples. In order to improve in finding similar documents, the system collects user feedback which indicates documents in the collection that are falsely included, and/or additional similar documents that are not included in the collection. The user feedback provides training data for the supervised machine learning, so that the supervised machine-learning algorithm may analyze the user feedback and infer a set of classification rules. The inferred classification rules can be used in predicting similarities of future documents.

To infer a classification rule, certain attributes or features need to be extracted from input training data so that the extracted attributes or features are associated with a classification outcome. In embodiments of the present invention, four groups of features are extracted from the source and related documents. The first feature is the global rank of a document's similarity. The similar documents are calculated based on the semantic-entity-occurrence similarity and presented to users in an order of similarity rank. The second group of features involves shared semantic entities between two documents.

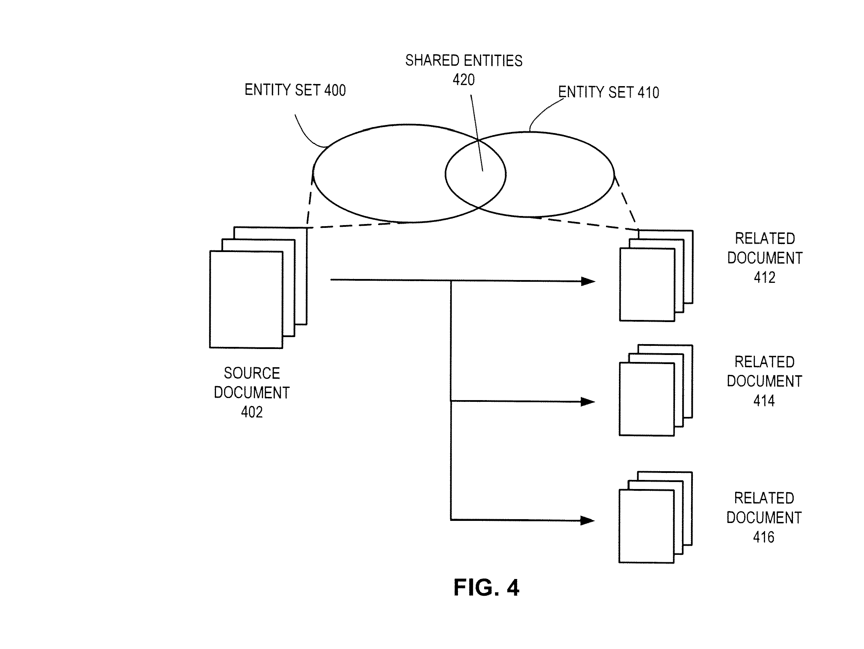

In the example shown in FIG. 4, after performing the semantic-entity extraction, the system determines an entity set 400 for source document 402, and an entity set 410 for a related document 412. The intersection between entity set 400 and entity set 410 forms a shared entity set 420. Similarly, other shared entity sets can be determined between source document 402 and related document 414 or 416. This group of features is based on the number and weight of shared entities in the shared entity sets:
- *SharedCount:* number of entities shared between two documents,
- *SharedAverage:* average entity weight for the entities shared between two documents,
- *SharedMax:* maximum entity weight for the entities shared between two documents,
- *SharedMin:* minimum entity weight for the entities shared between two documents, and
- *Typed shared entity values:* different types of entities such as person, company, and location; the above-mentioned features can be distinguished by different types:
   ■ *SharedTypeXCount,*
   ■ *SharedTypeXAverage,*
   ■ *SharedTypeXMax,* and
   ■ *SharedTypeXMin*
   wherein **X** is one of {Person, Organization, Topic, CapitalizedSequence, Abbreviation, URL, EmailAddress, PhoneNumber, StreetAddress, Location, DateTime, Signature ...}.

The third group of features relates to the entities present only in the source document:
- *SourceCompCount:* number of entities in the source document that are not shared,
- *SourceCompAverage:* average weight of the entities in the source document that are not shared,
- *SourceCompMax:* maximum weight of the entities in the source document that are not shared,
- *SourceCompMin:* minimum weight of the entities in the source document that are not shared,
- *Typed source complementary entity values:* source complementary entity number, average, max, and min, distinguished by different types:
   **■** *SourceTypeXCount,*
   ■ *SourceTypeXAverage,*
   ■ *SourceTypeXMax,* and
   ■ *SourceTypeXMin*
   wherein **X** is one of {Person, Organization, Topic, CapitalizedSequence, Abbreviation, URL, EmailAddress, PhoneNumber, StreetAddress, Location, DateTime, Signature...},
- *SourceDocumentWeight:* weight of the source document calculated by the number and weight of the entities in the document,
- *SourceOccurenceMagnitude:* maximum entity weight in the source document, and
- *SourceOccurenceAverage:* average entity weight in the source document.

The fourth group offeatures involve those entities present only in the related document, which include:
- *RelatedCompCount:* number of entities in the potentially related document that are not shared,
- *RelatedCompAverage:* average weight ofthe entities in the potentially related document that are not shared,
- *RelatedCompMax:* maximum weight of the entities in the potentially related document that are not shared,
- *RelatedCompMin:* minimum weight of the entities in the potentially related document that are not shared,
- *Typed related complementary entity values:* typed number, average, max, min of the complementary entities in the related document:
   ■ *RelatedTypeXCount,*
   ■ *RelatedTypeXAverage,*
   ■ *RelatedTypeXMax,* and
   ■ *RelatedTypeXMin,*
   wherein *X* is one of {Person, Organization, Topic, CapitalizedSequenee, Abbreviation, URL, EmailAddress, PhoneNumber, StreetAddress, Location, DateTime, Signature...},
- *RelatedDocumentWeight:* weight of the potentially related document calculated by the number and weight of the entities in the document,
- *RelatedOccurenceMagnitude:* maximum entity weight in the potentially related document, and
- *RelatedOccurenceAverage:* average entity weight in the potentially related document.

Features defined above can be used to generate generic rules for optimizing the calculation of the similar documents based on users' feedback. Customization in finding similar documents for a respective user is feasible using only the user's feedback. User contextual information such as user location, social context from emails, time information, and user tasks can also be applied to further customize the calculation.

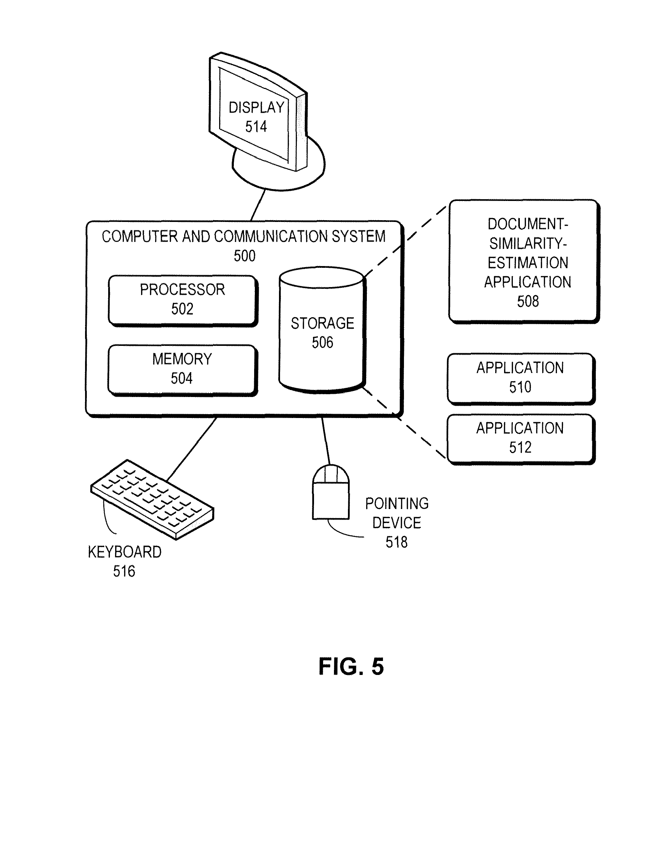

FIG. 5 illustrates an exemplary computer system for estimating document similarity in accordance with one embodiment of the present invention. In one embodiment, a computer and communication system 500 includes a processor 502, a memory 504, and a storage device 506. Storage device 506 stores a document-similarity estimation application 508, as well as other applications, such as applications 510 and 512. During operation, document-similarity estimation application 508 is loaded from storage device 506 into memory 504 and then executed by processor 502. While executing the program, processor 502 performs the aforementioned functions. Computer and communication system 500 is coupled to an optional display 514, keyboard 516, and pointing device 518.

The data structures and code described in this detailed description are typically stored on a computer-readable storage medium, which may be any device or medium that can store code and/or data for use by a computer system. The computer-readable storage medium includes, but is not limited to, volatile memory, nonvolatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, methods and processes described herein can be included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

## Claims

1. A computer-implemented method for optimizing and customizing document-similarity calculation, the method comprising:
presenting, by a computer, a collection of similar documents to a user;
collecting feedback on the similarity of the documents from the user;
generating, by the computer, generic rules for calculating document similarity; and
filtering documents with customized similarity calculation based on the feedback provided by the user.

2. The method of claim 1, wherein the user feedback comprises one or more of:
an indication of documents in the collection that are falsely included; and
an indication of additional similar documents not included in the collection.

3. The method of claim 1 or claim 2, further comprising calculating the document similarity by:
extracting a number of semantic entities from the documents; and
calculating a similarity measure between the documents based on inverse document frequency (IDF) values of the extracted semantic entities.

4. The method of any of the preceding claims, wherein generating the generic rules for calculating document similarity comprises:
extracting features from a respective document and its related documents based on the collected user feedback; and
applying machine-learning techniques to generate rules based on the extracted features.

5. The method of claim 4, wherein the extracted features of the respective document and its related documents comprise one or more of:
a similarity rank of the related documents;
a document weight of respective and related documents;
an entity occurrence magnitude of respective and related documents;
an entity occurrence average of respective and related documents;
a number of shared entities among respective and related documents;
an average entity weight of the shared entities among respective and related documents;
a maximum entity weight of the shared entities among respective and related documents;
a minimum entity weight of the shared entities among respective and related documents;
a typed number, average entity weight, minimum entity weight, and maximum entity weight of the shared entities among respective and related documents;
a number of complementary (none-shared) entities in respective and related documents;
an average entity weight of the complementary entities in respective and related documents;
a maximum entity weight of the complementary entities in respective and related documents;
a minimum entity weight of the complementary entities in respective and related documents; and
a typed number, average entity weight, minimum entity weight, and maximum entity weight of the complementary entities in respective and related documents.

6. The method of any of the preceding claims, further comprising generating a decision tree for calculating document similarity using supervised machine learning.

7. The method of any of the preceding claims, wherein filtering documents with customized similarity calculation for a user comprises:
extracting features from a respective document and its related documents based on the feedback provided by the user; and
applying machine-learning techniques to generate filtering rules based on the extracted features.

8. A non-transitory computer-readable storage medium storing instructions that when executed by a computer cause the computer to perform a method according to any of the preceding claims.

9. A system, comprising:
a presentation mechanism configured to present a collection of similar documents to a user;
a feedback-collecting mechanism configured to collect feedback on the similarity of the documents from the user;
a rule-generating mechanism configured to generate generic rules for calculating document similarity; and
a filtering mechanism configured to filter documents with customized similarity calculation based on the feedback provided by the user.

10. The system of claim 9, further comprising a calculation mechanism configured to calculate the document similarity by:
extracting a number of semantic entities from the documents; and
calculating a similarity measure between the documents based on inverse document frequency (IDF) values of the extracted semantic entities.

11. The system of claim 9 or claim 10, wherein while generating the generic rules for calculating document similarity, the rule-generation mechanism is configured to:
extract features from a respective document and its related documents based on the collected user feedback; and
apply machine-learning techniques to generate rules based on the extracted features.

12. The system of claim 11, wherein the extracted features of the respective document and its related documents comprise one or more of:
a similarity rank of the related documents;
a document weight of respective and related documents;
an entity occurrence magnitude of respective and related documents;
an entity occurrence average of respective and related documents;
a number of shared entities among respective and related documents;
an average entity weight of the shared entities among respective and related documents;
a maximum entity weight of the shared entities among respective and related documents;
a minimum entity weight ofthe shared entities among respective and related documents;
a typed number, average entity weight, minimum entity weight, and maximum entity weight of the shared entities among respective and related documents;
a number of complementary (none-shared) entities in respective and related documents;
an average entity weight of the complementary entities in respective and related documents;
a maximum entity weight of the complementary entities in respective and related documents;
a minimum entity weight of the complementary entities in respective and related documents; and
a typed number, average entity weight, minimum entity weight, and maximum entity weight of the complementary entities in respective and related documents.

13. The system of any of claims 9 to 12, further comprising a generating mechanism configured to generate a decision tree for calculating document similarity using supervised machine learning.

14. The system of any of claims 9 to 13, wherein while filtering documents with customized similarity calculation, the filtering mechanism is configured to:
extract features from a respective document and its related documents based on the feedback provided by the user; and
apply machine-learning techniques to generate filtering rules based on the extracted features.
